(19) Europäisches Patentamt
European Patent Office
Office européen des brevets

(11) EP 2 334 004 B1

(12) EUROPEAN PATENT SPECIFICATION

(45) Date of publication and mention of the grant of the patent:
**20.03.2013 Bulletin 2013/12**

(51) Int Cl.:
*H04L 7/00* *(2006.01)*      *H04L 27/26* *(2006.01)*
*H04L 7/04* *(2006.01)*

(21) Application number: **09290930.8**

(22) Date of filing: **11.12.2009**

(54) **Efficient estimation/compensation of increased time-delays without extra pilot tone**

Effiziente Schätzung/Kompensierung von erhöhten Zeitverzögerungen ohne zusätzlichen Pilotton

Évaluation/compensation efficace des délais améliorés sans ton de pilote supplémentaire

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**15.06.2011 Bulletin 2011/24**

(73) Proprietor: **Alcatel Lucent**
**75007 Paris (FR)**

(72) Inventors:
• **Schaich, Frank**
**70374 Stuttgart (DE)**
• **Rueegg, Andreas**
**70469 Stuttgart (DE)**

(74) Representative: **Wetzel, Emmanuelle et al**
**Alcatel Lucent**
**Intellectual Property & Standards**
**70430 Stuttgart (DE)**

(56) References cited:
WO-A1-00/79749      WO-A1-03/028205
US-A1- 2002 114 270      US-A1- 2003 112 825
US-A1- 2006 067 432

• **SATORU AIKAWA ET AL: "PERFORMANCE OF TRELLIS CODED 256 QAM SUPER-MULTICARRIER MODEM USINGVLSI'S FOR SHD INTERFACE OUTAGE-FREE DIGITAL MICROWAVE RADIO" IEEE TRANSACTIONS ON COMMUNICATIONS, IEEE SERVICE CENTER, PISCATAWAY, NJ, US LNKD- DOI: 10.1109/TCOMM.1994.580250, vol. 42, no. 2/03/04, 1 February 1994 (1994-02-01), pages 1415-1421, XP000447365 ISSN: 0090-6778**

EP 2 334 004 B1

## Description

The invention relates to a method of synchronization in a multicarrier communication system, more particularly to a time delay compensation method.

## Background and related art

The compensation range of pilot-based time delay estimation is upper limited by the frequency distance of the pilots. Due to the periodicity of the phase the estimation fails for time delays exceeding a certain threshold.

WO 03/028205 A1 describes systems and methods for correcting phase ambiguity in a total pilot phase value. Examples include comparing and correcting total phase values having different pilot frequencies within the same sampling interval, such as the same data symbol. Another example includes correcting a total pilot phase value for one sampling interval and corresponding to one pilot frequency using nonlinear filtering of values of the total pilot phase for prior sampling intervals at the same pilot frequency.

Embodiments of the invention provide a method of synchronization in a communication system. The method comprises the following steps. Determining a time delay on the basis of pilots and processing data symbols using said time delay. The method further comprises the steps of processing said data symbols using at least one further time delay comprising said time delay and at least one time offset and choosing one of said time delay or said at least one further time delay fulfilling a selection criterion of an algorithm.

Because the further time delay comprises at least one time offset the communication can be synchronized for time delays exceeding a certain threshold. By choosing one of said time delay or said at least one further time delay time delays leading to phase shifts between pilots of more than $2\pi$ can be estimated.

The algorithm estimates the time delay as in conventional systems. Afterwards, an offset is added to the estimated time delay. The further time delay is calculated according to the following formula:

$$\Delta t_n = \Delta t_{est} + \frac{n}{m},$$

wherein m is the number of sub-carriers between the pilots and n is an integer number. $\Delta t_{est}$ is the time delay estimated according to conventional time delay estimation. Preferably n has 2N+1 values {-N; -N+1; ...; 0; ...; N-1; N}.

It is proposed to do the signal processing after delay estimation 2N+1 times in parallel, wherein n is a user defined parameter, depending on the targeted estimation range. The phase slopes and time delays used by the 2N+1 instances are

$$\Delta \hat{\varphi}_n = \Delta \hat{\varphi}_{est} + \frac{\pi \cdot n}{m} \quad \text{and} \quad \Delta t_n = \Delta t_{est} + \frac{n}{m}$$

respectively, where $\Delta \hat{\varphi}_{est}$ and $\Delta t_{est}$ are the estimated phase slope and the estimated time delay. $m$ is the number of subcarriers between the pilots and $n \in (-N,...,0,...,N)$. N is a design parameter with which the range of compensable time delay respectively phase shifts is set. The respective phase shifts lie in the range of

$$-(N+1)\frac{\pi}{m} < \Delta \hat{\varphi} < (N+1)\frac{\pi}{m}.$$

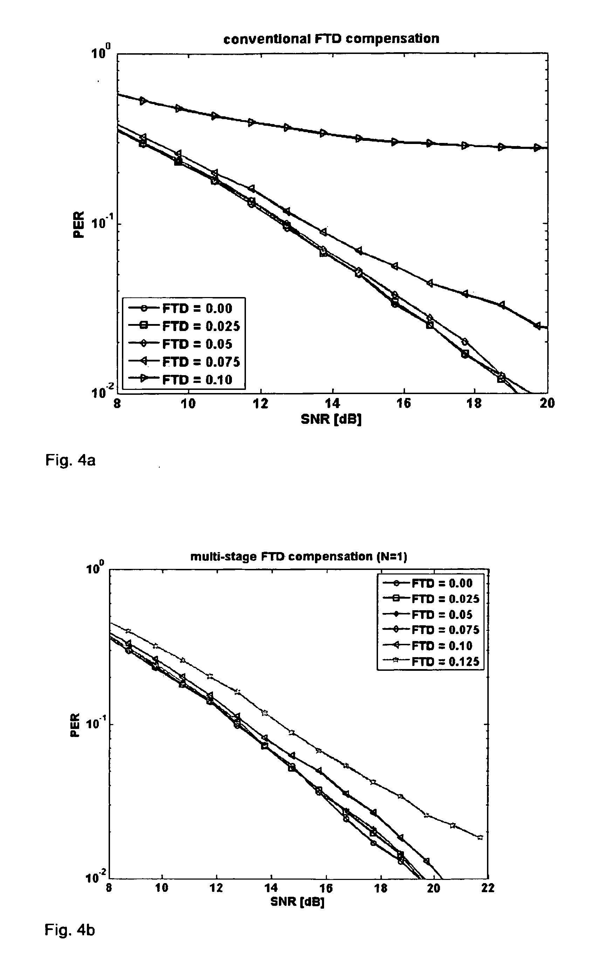

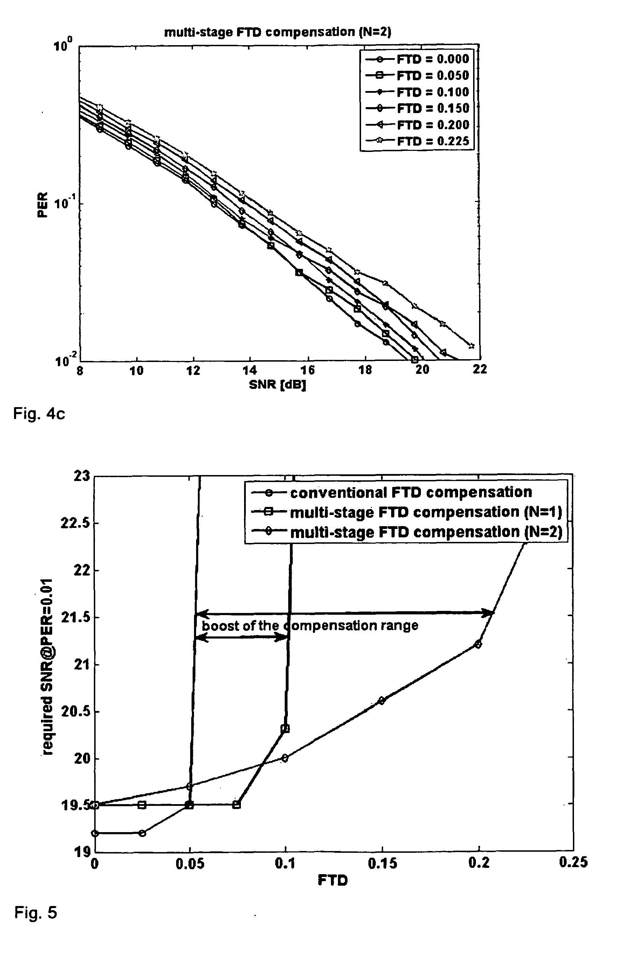

This range naturally cannot be exceeded infinitely, as at some point inter-symbol interference gets significant. However, it can be seen in the simulation results in Figs 4 and 5 that the range still can be exceeded significantly compared to the conventional compensation method.

By calculating the offset in the above mentioned way phase ambiguities are considered in time delay estimation. Conventional time delay estimators exploit the phase difference between adjacent pilots. A time delay introduces a linear frequency dependent phase shift. Thus, adjacent pilots no longer have zero phases at the receiver. With the help of the phase difference between two adjacent pilots the actual phase slope is evaluated. Due to the periodicity of the phase different phase shifts may lead to the same estimated phase difference. By adding the time offset to the time delay, said ambiguities can be estimated.

Signal processing is performed with every calculated time delay, comprising the time delay calculated according to conventional methods and the time delays comprising the conventional calculated time delay and the time offsets. After signal processing the plurality of processed signals are compared in order to detect the correct time delay. The correct time delay is the time delay that corresponds to the actual phase shift. Thus, the correct time delay leads to a correct estimation of the phase shift. There is a plurality of criteria, which can be used to make this decision. The variance of the angle of the equalized QAM (quadrature amplitude modulation) symbols can be used as a decision criterion. Therefore the time delay is selected, which provides the QAM symbols with the lowest variance of the angle after rotating all symbols of the processed burst into the first quadrant of the complex plane.

Another criterion can be any cyclic redundancy check. A further criterion may be the characteristics of the log likelihood values fed into or fed out of the turbo decoder, for example the sum of reliabilities.

According to embodiments of the invention the at least one phase shift between the received pilots corresponding to the at least one further time delay is outside a phase interval of $2\pi$ length such as $[0; 2\pi]$ or $[-\pi; +\pi]$.

In other words, the phase shift between two received pilots is bigger than an interval of $2\pi$ length and the further time delay corresponds to this phase shift.

According to embodiments of the invention the method comprises a further step of converting said time delay in a phase shift and said at least one further time delay in at least one further phase shift before processing said data symbols. Each time delay corresponds to a phase shift and each further time delay corresponds to a further phase shift. This means, each time delay can be converted into a phase shift for processing said data symbols.

According to embodiments of the invention the processing of the data symbols is repeated $2N + 1$ times with $2N + 1$ different time or phase offsets. N is an integer number. The processing has to be done $2N + 1$ times because $2N + 1$ phase shifts and/or time delays are available for data symbol processing. The first possibility is the phase shift and/or the time delay with no time/phase offset, which is the phase shift and/or time delay according to conventional estimations. $2N$ further phase shifts and/or time delays are used for data symbol processing because for each integer number n a positive and a negative offset are calculated.

According to embodiments of the invention the processing of the data symbols is performed in parallel. The parallel processing does not increase the processing delay because the signal is processed in parallel with the further phase shifts and/or the time delays.

According to embodiments of the invention the processing of the data symbols is performed serially. The serial processing keeps complexity lower.

According to embodiments of the invention n is adapted to a distance between a transmitter and a receiver. High values for n are required when transmitter and receiver are located at a far distance from each other, while low values for n may be applied for a small distance between transmitter and receiver.

According to embodiments of the invention N is adapted to the amount and location of obstacles between a transmitter and a receiver. The amount of obstacles affects the signal transmission way. This means, the signal transmission way becomes longer when the amount of obstacles increases. Thus, the signal transmission way depends on the distance between transmitter and receiver and the amount of obstacles between the transmitter and the receiver. As the time delay and/or the phase shift depends on the signal transmission way it is advantageous to take the signal transmission way into account for time delay estimation.

According to embodiments of the invention n is adapted to a quality of a coarse frame synchronization of the receiver. This is advantageous for adapting the amount of calculated phase shift and/or time delays to the quality of the coarse frame synchronization of the receiver.

According to embodiments of the invention the selection criterion is based on a variance of angle of equalized QAM symbols or on a cyclic redundancy check or on characteristics of log-likelihood values. QAM symbols mean quadrature amplitude modulation symbols. Log-likelihood values are fed into or fed out of the turbo decoder, for example the sum of the reliabilities.

In another aspect the invention relates to a telecommunication device comprising determination means for determining a time delay on the basis of pilots, first processing means for processing data symbols using said time delay, second processing means for processing said data symbols using at least one further time delay comprising said time delay and at least one time offset and choosing means for choosing one of said time delay or said at least one further time delay fulfilling a selection criterion of an algorithm.

In yet another aspect the invention relates to a receiver comprising a telecommunication device according to embodiments of the invention.

According to embodiments of the invention the receiver is a base station or a mobile station.

In yet another aspect the invention relates to a system comprising a telecommunication device according to embodiments of the invention.

According to embodiments of the invention the system is a multi-carrier modulation radio communication system. The multi-carrier modulation radio communication system may for example be an OFDM system. OFDM means orthogonal frequency division multiplex.

**Brief description of the drawings**

In the following preferred embodiments of the invention will be described, by way of example only, and with reference to the drawings in which:

Fig. 1      is a block diagram of parallel signal processing with a plurality of time delays,

Fig. 2a     is a diagram of QAM constellation before symbol rotation with wrong time delay estimation,

Fig. 2b     is a diagram of QAM constellation before symbol rotation with correct time delay estimation,

Fig. 3a     is a diagram of QAM constellation after symbol rotation with wrong time delay estimation,

Fig. 3b     is a diagram of QAM constellation after symbol rotation with correct time delay estimation,

Fig. 4a     is a diagram of conventional fractional time delay compensation,

Fig. 4b     is a diagram of multistage fractional time delay compensation with n=1,

Fig. 4c     is a diagram of multistage fractional time delay compensation with n=2,

Fig. 5      is a diagram of the required signal to noise ratio for a packet error rate of 0.01,

Fig. 6      is a block diagram of a method of synchronization in a communication system,

Fig. 7      is a block diagram of a telecommunication device, and

Fig. 8      is a block diagram of a receiver.

**Detailed description**

Like numbered elements in these Figs. are either identical elements or perform the same function. Elements which have been discussed previously will not necessarily be discussed in later Figs. if the function is identical.

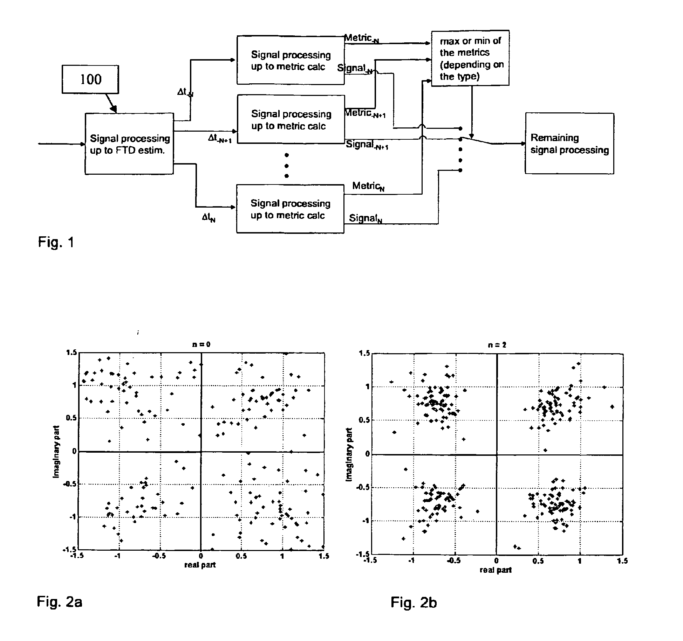

Fig. 1 is a block diagram of parallel signal processing with a plurality of time delay estimations. In a first step 100 the signal is processed as usual up to fractional time delay estimation. Afterwards, pluralities of time delay estimations are used for signal processing up to metric calculation.

The received signal is processed up to the time delay processing (FTD = fractional time delay, i.e. the time delay normalized to the length of a single multi carrier symbol $T_s$). Then, signal processing continues 2N+1 times, each with the respective delay $\Delta t_n$ . Within the figure the multi stage processing is performed in parallel. Naturally it can be done serially as well. Parallel processing as depicted in fig. 1 does not increase the processing delay. Serial processing keeps complexity lower. Once all stages are ready the decision based on the metrics is performed and the respective signal forwarded to the remaining signal processing.

Due to the fact that the time delay a signal encounters changes smoothly from frame to frame, the increase in complexity can be reduced significantly. It is enough to do the multi stage processing every once in a while depending on the rate of change. In between just a single branch is active, i.e. the one using the actual time delay.

Naturally, at some point a decision has to be taken, which of the (2N+1) stages is using the correct time delay. Thus, a metric has to be defined, which can be used to make this decision.

Some possibilities are:

1. Variance of the angle of the equalized QAM symbols, after rotating all symbols of the processed burst into the first quadrant of the complex plane. The rotation is easily achieved by taking the absolute value of the real and imaginary part of the complex symbols. The correct time delay leads to the lowest variance. Metric calculation is performed directly before the demapper, thus, the only processing step done (2N+1) times is the channel equalization.

2. Any cyclic redundancy check (CRC), included into the system, e.g. HARQ appends a CRC to the transmitted packets. This check either can be used for the decision. All processing steps up to the CRC check are done (2N+1) times.

3. The characteristics of the log-likelihood values fed into or fed out of the turbo decoder, e.g. sum of the reliabilities. Here, metric calculation is done directly after the demapper or after turbo decoding, respectively.

The second and third metrics are self explaining. The first one is clarified with the following example:

A fractional time delay (FTD) of 15 % is applied to the signal. A conventional estimator would deliver -6.3 % for m=9 as estimated, which complies with the case of n = 0. This estimate is wrong leading to high error rates.

When applying the multi-stage compensator, proposed here, with N = 2, the five stages are using the estimates:

**Table 1: FTD estimates used by the diverse stages:**

| n | estimate ($\frac{\Delta t_n}{T_S}$ in percent) | remarks |
|---|---|---|
| -2 | -28,5 % | |
| -1 | -17,4 % | |
| 0 | -6.3 % | the estimation a conventional estimator delivers |
| 1 | 4.8 % | |
| 2 | 15.9 % | the correct FTD (the small discrepancy is due to the channel and noise) |

Fig. 2a is a diagram of QAM constellations before symbol rotation with wrong time delay estimation. Time delay estimation has been performed for n=0 as in common communication systems. The QAM data symbols are depicted in the complex plane, the real part of each symbol represented in y-direction, the imaginary part represented in x-direction. The plurality of QAM symbols are spread over each quadrant of the diagram due to the wrong time delay estimation. The time delay has been estimated wrongly because of the phase ambiguity. The spread QAM symbols lead to a high error rate in signal processing.

Fig. 2b is a diagram of QAM symbols similar to Fig. 2a. Time delay estimation has been performed in Fig. 2b with multistage time delay estimation according to embodiments of the invention. In Fig. 2b the QAM symbols calculated with time delay estimation according to n=2 are depicted. It is clearly visible, that in each quadrant the QAM symbols are located nearer to each other than in Fig. 2a. This is due to a correct time delay estimation with n=2. The standard variance of the QAM symbols with respect to a mean value is lower in Fig. 2b than in Fig. 2a. Thus, time delay estimation with n=2 is the correct time delay estimation.

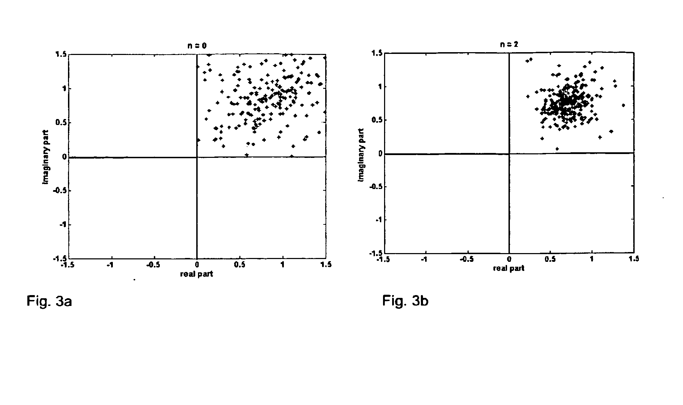

Fig. 3a is a diagram of QAM data symbols after rotation of the QAM symbols into the upper right quadrant although every other quadrant could be used.

Fig. 3b is a diagram of QAM symbols after rotation of the symbols of Fig. 2b. The rotation is performed in the same way as for Fig. 3a. When comparing the variance of the QAM symbols of Fig. 3b to the variance of the QAM symbols of Fig. 3a the correct time delay estimation can be found. The variance for the QAM symbols of

Fig. 3b is significantly lower than the variance of the QAM symbols in Fig. 3a. Thus, time delay estimation of Fig. 3b with n=2 is the correct time delay estimation.

Rotating the QAM symbols into one quadrant is advantageous for comparing standard variances of the QAM symbols because without rotation QAM symbols in the border region of a quadrant may be detected in the quadrant due to noise or interferences despite the QAM symbols were transmitted as QAM symbols in another quadrant. Thus, by rotating the QAM symbols into one quadrant the calculation of the variance is performed correctly and no QAM symbol is associated to a wrong quadrant. Additionally the inherent variance of the phase in QAM constellations would disturb the calculation of the metric. By rotating the symbols this inherent variance of the phase is cancelled.

In the following in figs. 4a-4c some exemplary results show the gains achievable with this scheme. The first metric (variance of the angles of the rotated QAM symbols) is applied.

The physical layer used for assessing the performance is WiMAX based enhanced by a filter bank. In literature such a system is known as filter bank based multi carrier (FBMC). It is a candidate for replacing the OFDM based physical layers used nowadays. Naturally uplink transmission is looked at, as the uplink is much more burdened with time delays. As performance measure the packet error rate (PER, packet size = 64 Bytes) depending on the signal-to-noise ratio (SNR in dB) is used. The velocity of the mobile device is assumed to be 3km/h. The fundamental parameters are taken from the WiMAX standard (QPSK, CTC 1/2, 4 iterations):

number of subcarriers =1024

subcarrier spacing =10.94 kHz
permutation scheme = AMC

It is to be noted that the principle of the invention can also be applied to any other wireless multi-carrier modulation radio communication system.

Fig. 4a is a diagram of a plurality of the packet error rate depending on the signal to noise ratio for time delay estimation with n=0. This corresponds to conventional time delay estimation. Five graphs with different fractional time delays are depicted. The y-axis represents the packet error rate in logarithmic scale and the x-axis represents the signal to noise ratio in dB. A first graph corresponds to a fractional time delay of 10%, a second graph to a fractional time delay of 7.5%, a f third graph to a fractional time delay of 5%, a fourth graph to a fractional time delay of 2.5% and a fifth graph to a fractional time delay of 0%. For each graph the packet error rate decreases when the signal to noise ratio increases. The packet error rate of the first graph with the fractional time delay of 10% is significantly higher than the packet error rate of every other graph over the whole signal to noise range. The second graph representing a fractional time delay of 7.5% has a significantly higher packet error rate in the range of 12db-20db compared to the third, fourth and fifth graph.

Fig. 4b is a diagram showing a plurality of graphs representing different fractional time delays. The axis are the same as in Fig. 4a and the fractional time delay compensation is done with n=1. Additionally to the graphs representing fractional time delays from 0% to 10%, which were also depicted in Fig. 4a with a fractional time delay compensation of n=0, Fig. 4b comprises a graph representing fractional time delay of 12.5%. In comparison to Fig. 4a the packet error rate decreases for every graph. For a fractional time delay of 10% the packet error rate decreases comparable to the fractional time delays from 0 to 7.5%. This shows that with a fractional time delay compensation with n=1, the fractional time delay of 10% can be compensated much better than with n=0. The graph representing a fractional time delay of 12.5% has still a significantly higher packet error rate than the other graphs for a fractional time delay from 0% to 10%.

Fig. 4c is a diagram showing different graphs for different fractional time delays from 0% to 22.5%. The packet error rate is decreased in comparison to Fig. 4a and b significantly. Especially for graphs with a fractional time delay of 10%, 15%, 20% and 22.5% the packet error rate decreases comparably to the graphs with lower fractional time delays. The fractional time delay compensation in Fig. 4c is done with n=2. This shows that for n=2 the fractional time delay compensation works even better than with n=1. Thus, the higher n is the better the fractional time delay compensation works. n is limited by the complexity of signal processing.

Fig. 5 is a diagram showing the required signal to noise ratio for a packet error rate of 1% with respect to the fractional time delay. The fractional time delay is represented by the x-axis and the required signal to noise ratio by the y-axis. In Fig. 5 three graphs are depicted representing conventional fractional time delay compensation (n=0), multistage fractional time delay compensation with n=1 and multistage fractional time delay compensation with n=2. The required signal to noise ratio for a packet error rate of 1% increases rapidly from a fractional time delay compensation of 5% on. For multistage fractional time delay compensation with n=1 the required signal to noise ratio increases in a comparable way for a fractional time delay of 10%. This means the compensation range is boosted from a fractional time delay of 5% to a fractional time delay of 10% when using multistage fractional time delay compensation with n=1.

For multistage fractional time delay compensation with n=2 the compensation range is boosted from 5% to 20%. Thus, the higher n is the bigger the compensation range gets of the fractional time delay compensation.

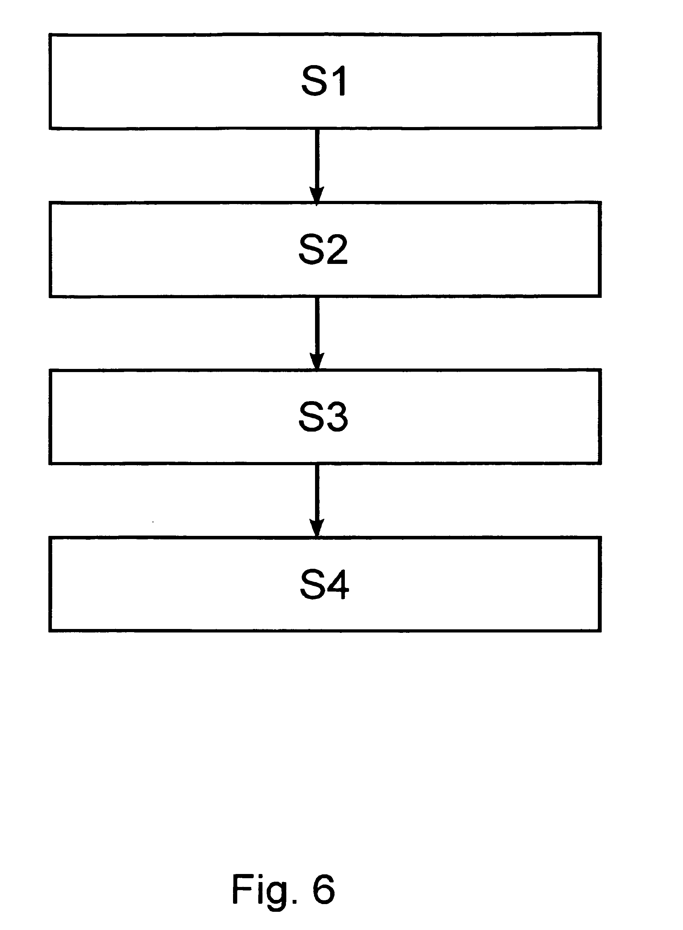

Fig. 6 is a block diagram of a method of synchronization in a communication system. In step S1 the time delay is determined on the basis of pilots. In step S2 data symbols are processed using said time delay. In step S3 said data symbols are processed using at least one further time delay comprising said time delay and at least one time offset. In step S4 offset time delay or said at least one further time delay is chosen, if it fulfils a selection criterion of an algorithm.

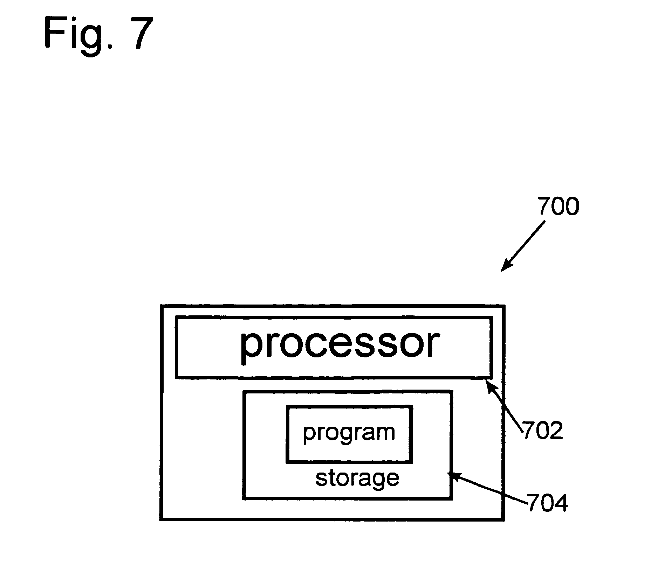

Fig. 7 is a block diagram of a telecommunication device 700. The telecommunication device 700 comprises a processor 702. The processor is adapted for determining a time delay on the basis of pilots, processing data symbols using said time delay, processing said data symbols using at least one further time delay comprising said time delay and at least one time offset and choosing one offset time delay or said at least one further time delay fulfilling a selection criterion of an algorithm. Preferably, the processor executes a program 704 in storage 706 for performing the above steps.

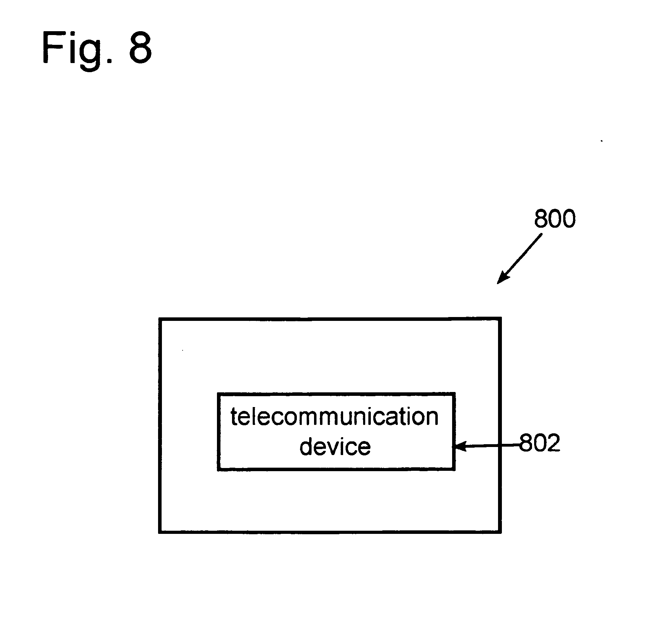

Fig. 8 is a block diagram of a receiver 800 comprising a telecommunication device 802. The telecommunication device 802 is the telecommunication device 700 depicted in Fig. 7.

| 100 | Signal processing |
|-----|-------------------|
| 700 | Telecommunication device |
| 702 | Processor |
| 704 | Program |
| 706 | Storage |

(continued)

| 800 | Receiver |
|-----|----------|
| 802 | Telecommunication device |

## Claims

1. A method of synchronization in a communication system, the method comprising the steps of:

   - determining (S1) a time delay on the basis of pilots, and
   - processing (S2) data symbols using said time delay,
   **characterized in that** the method further comprises the steps of:
   - processing (S3) said data symbols using at least one further time delay $\Delta t_n$ comprising said time delay and at least one time offset, wherein the at least one further time delay is calculated according to the formula

   $$\Delta t_n = \Delta t_{est} + \frac{n}{m},$$ wherein m is the number of sub-carriers between the pilots, n is an integer number, and

   $\Delta t_{est}$ is said time delay, wherein n has 2*N+1 values, wherein the processing of the data symbols is repeated 2*N+1 times with 2*N+1 different time or phase offsets, wherein N is an integer number, wherein N is adapted to a distance between a transmitter and a receiver, and
   - choosing (S4) one of said time delay or said at least one further time delay fulfilling a selection criterion of an algorithm,
   wherein said algorithm is based on a variance of angle of equalized QAM symbols or on a cyclic redundancy check or on characteristics of log-likelihood values.

2. Method according to claim 1, wherein at least one phase shift between the received pilots corresponding to the at least one further time delay Is outside a phase interval of 2 PI length such as [0, 2*PI] or [-PI, +PI].

3. Method according to any one of the preceding claims, the method comprising a further step of converting said time delay in a phase shift and said at least one further time delay in at least one further phase shift before processing said data symbols.

4. Method according to any one of the preceding claims, wherein the processing of the data symbols is performed paralelly.

5. Method according to any one of the preceding claims, wherein the processing of the data symbols is performed serially.

6. Method according to any one of the preceding claims, wherein N is adapted to the amount of obstacles between a transmitter and a receiver.

7. Method according to any one of the preceding claims, wherein N is adapted to a quality of a coarse frame synchronization of the receiver.

8. Telecommunication device (700; 802) comprising:

   - determination means for determining a time delay on the basis of pilots,
   - first processing means (702) for processing data symbols using said time delay, **characterised by**:
   - second processing means (702) for processing said data symbols using at least one further time delay $\Delta t_n$ comprising said time delay and at least one time offset, wherein the at least one further time delay is calculated according to the formula $\Delta t_n = \Delta t_{est} + \frac{n}{m},$ wherein m is the number of subcarriers between the pilots, n is an integer number, and $\Delta t_{est}$ is said time delay, wherein the processing of the data symbols is repeated 2*N+1 times with 2*N+1 different time or phase offsets, wherein N is an integer number, wherein N is adapted to a distance between a transmitter and a receiver, and

- choosing means (702) for choosing one of said time delay or said at least one further time delay fulfilling a selection criterion of an algorithm, wherein said algorithm is based on a variance of angle of equalized QAM symbols or on a cyclic redundancy check or on characteristics of log-likelihood values.

**9.** Receiver (800) comprising a telecommunication device (802) according to claim 8.

**10.** Receiver according to claim 9, wherein the receiver is a base station or a mobile station.

**11.** System comprising a telecommunication device according to claim 8.

**12.** System according to claim 11, wherein the system is a multi-carrier modulation radio communication system.

**Patentansprüche**

**1.** Verfahren zur Synchronisation In einem Kommunikationssystem, wobei das Verfahren die folgenden Schritte umfasst:

- Bestimmen (S1) einer Zeitverzögerung auf der Basis von Piloten, und
- Verarbeiten (S2) von Datensymbolen unter Verwendung der besagten Zeitverzögerung, **dadurch gekennzeichnet, dass** das Verfahren weiterhin die folgenden Schritte umfasst:
- Verarbeiten (S3) der besagten Datensymbole unter Verwendung mindestens einer weiteren Zeitverzögerung $\Delta t_n$, welche die besagte Zeitverzögerung und mindestens einen Zeitversatz einschließt, wobei die besagte mindestens eine weitere Zeitverzögerung gemäß der Formel $\Delta t_n = \Delta t_{est} + \frac{n}{m}$ berechnet wird, wobei m die Anzahl der Subträger zwischen den Piloten darstellt, n eine ganze Zahl ist, und $\Delta t_{est}$ die besagte Zeitverzögerung darstellt, wobei n 2\*N+1 Werte hat, wobei die Verarbeitung der Datensymbole 2\*N+1 Mal mit 2\*N+1 verschiedenen Zeit-oder Phasenversätzen wiederholt wird, wobei N eine ganze Zahl ist, wobei N einer Entfernung zwischen einem Sender und einem Empfänger angepasst wird, und
- Wählen (S4) entweder der besagten Zeitverzögerung oder der besagten mindestens einen weiteren Zeitverzögerung, welche ein Auswahlkriterium eines Algorithmus erfüllt, wobei der besagte Algorithmus auf einer Winkelvarianz von entzerrten QAM-Symbolen oder auf einer zyklischen Redundanzprüfung oder auf Eigenschaften von Log-Wahrscheinlichkeitswerten basiert.

**2.** Verfahren nach Anspruch 1, wobei mindestens eine Phasenverschiebung zwischen den empfangenen Piloten, welche der mindestens einen weiteren Zeitverzögerung entspricht, außerhalb eines Phasenintervalls einer Länge von 2 PI wie beispielsweise [0, 2\*PI] oder [-PI, +PI] liegt.

**3.** Verfahren nach einem beliebigen der vorstehenden Ansprüche, wobei das Verfahren einen weiteren Schritt des Umwandelns der besagten Zeitverzögerung in eine Phasenverschiebung und der besagten mindestens einen weiteren Zeitverzögerung In mindestens eine weitere Phasenverschiebung vor der Verarbeitung der besagten Datensymbole umfasst.

**4.** Verfahren nach einem beliebigen der vorstehenden Ansprüche, wobei die Verarbeitung der Datensymbole parallel durchgeführt wird.

**5.** Verfahren nach einem beliebigen der vorstehenden Ansprüche, wobei die Verarbeitung der Datensymbole seriell durchgeführt wird.

**6.** Verfahren nach einem beliebigen der vorstehenden Ansprüche, wobei N der Menge von Hindernissen zwischen einem Sender und einem Empfänger angepasst wird.

**7.** Verfahren nach einem beliebigen der vorstehenden Ansprüche, wobei N einer Qualität einer groben Rahmensynchronisation des Empfängers angepasst wird.

**8.** Telekommunikationsvorrichtung (700; 802), umfassend:

- Bestimmungsmittel zum Bestimmen einer Zeitverzögerung auf der Basis von Piloten, und
- erste Verarbeitungsmittel (702) zum Verarbeiten von Datensymbolen unter Verwendung der besagten Zeitverzögerung,

**gekennzeichnet durch**:

- zweite Verarbeitungsmittel (702) zum Verarbeiten der besagten Datensymbole unter Verwendung mindestens einer weiteren Zeitverzögerung $\Delta t_n$, welche die besagte Zeitverzögerung und mindestens einen Zeitversatz einschließt, wobei die besagte mindestens eine weitere Zeitverzögerung gemäß der Formel $\Delta t_n = \Delta t_{est} + \dfrac{n}{m}$ berechnet wird,

wobei m die Anzahl der Subträger zwischen den Piloten darstellt, n eine ganze Zahl ist, und $\Delta t_{est}$ die besagte Zeitverzögerung darstellt, wobei die Verarbeitung der Datensymbole 2*N+1 Mal mit 2*N+1 verschiedenen Zeit- oder Phasenversätzen wiederholt wird, wobei N eine ganze Zahl ist, wobei N einer Entfernung zwischen einem Sender und einem Empfänger angepasst wird, und

- Wahlmittel (702) zum Wählen entweder der besagten Zeitverzögerung oder der besagten mindestens einen weiteren Zeitverzögerung, welche ein Auswahlkriterium eines Algorithmus erfüllt, wobei der besagte Algorithmus auf einer Winkelvarianz von entzerrten QAM-Symbolen oder auf einer zyklischen Redundanzprüfung oder auf Eigenschaften von Log-Wahrscheinlichkeitswerten basiert.

9. Empfänger (800) mit einer Telekommunikationsvorrichtung (802) gemäß Anspruch 8.

10. Empfänger nach Anspruch 9, wobei der Empfänger eine Basisstation oder eine mobile Station ist.

11. System mit einer Telekommunikationsvorrichtung gemäß Anspruch 8.

12. System nach Anspruch 11, wobei das System ein Funkkommunikationssystem mit Mehrträgermodulation ist.

**Revendications**

1. Procédé de synchronisation dans un système de communications, le procédé comprenant les étapes suivantes :

- détermination (S1) d'un temps de retard en se basant sur des pilotes, et
- traitement (S2) des symboles de données en utilisant ledit temps de retard, **caractérisé en ce que** le procédé comprend en outre les étapes suivantes :
- traitement (83) desdits symboles de données en utilisant au moins un temps de retard supplémentaire $\Delta t_n$ comprenant ledit temps de retard et au moins un décalage dans le temps, l'au moins un temps de retard supplémentaire étant calculé selon la formule $\Delta t_n = \Delta t_{est} + \dfrac{n}{m}$, où m désigne le nombre de sous-porteuses entre les pilotes, n un nombre entier, et $\Delta t_{est}$ est ledit temps de retard, n possédant 2*N+1 valeurs, le traitement des symboles de données étant répété 2*N+1 fois avec 2*N+1 décalage de temps ou de phase différents, N étant un nombre entier, N étant adapté à une distance entre un émetteur et un récepteur, et
- sélection (S4) de l'un parmi ledit temps de retard ou ledit au moins un temps de retard supplémentaire qui remplit un critère de sélection d'un algorithme,

ledit algorithme étant basé sur une variance de l'angle des symboles MAQ égalisés ou sur un contrôle de redondance cyclique ou sur les caractéristiques de valeurs de probabilité logarithmique.

2. Procédé selon la revendication 1, selon lequel au moins un décalage de phase entre les pilotes reçus correspondant à l'au moins un temps de retard supplémentaire se trouve en-dehors d'un intervalle de phase de longueur 2 PI telle que [O, 2*PI] ou [-PI, +PI].

3. Procédé selon l'une quelconque des revendications précédentes, le procédé comprenant une étape supplémentaire de conversion dudit temps de retard en décalage de phase et ledit au moins un temps de retard supplémentaire en au moins un décalage de phase supplémentaire avant le traitement desdits symboles de données.

4. Procédé selon l'une quelconque des revendications précédentes, selon lequel le traitement des symboles de données est réalisé en parallèle.

**5.** Procédé selon l'une quelconque des revendications précédentes, selon lequel le traitement des symboles de données est réalisé en série.

**6.** Procédé selon l'une quelconque des revendications précédentes, selon lequel N est adapté au nombre d'obstacles entre un émetteur et un récepteur.

**7.** Procédé selon l'une quelconque des revendications précédentes, selon lequel N est adapté à la qualité d'une synchronisation de trame grossière du récepteur.

**8.** Dispositif de télécommunication (700 ; 802) comprenant :

- des moyens de détermination pour déterminer un temps de retard en se basant sur des pilotes,
- des premiers moyens de traitement (702) pour traiter les symboles de données en utilisant ledit temps de retard, **caractérisé par** :
- des deuxièmes moyens de traitement (702) pour traiter lesdits symboles de données en utilisant au moins un temps de retard supplémentaire $\Delta t_n$ comprenant ledit temps de retard et au moins un décalage dans le temps, l'au moins un temps de retard supplémentaire étant calculé selon la formule $\Delta t_n = \Delta t_{est} + \dfrac{n}{m}$, où m désigne le nombre de sous-porteuses entre les pilotes, n un nombre entier, et $\Delta t_{est}$ est ledit temps de retard, le traitement des symboles de données étant répété 2*N+1 fois avec 2*N+1 décalage de temps ou de phase différents, N étant un nombre entier, N étant adapté à une distance entre un émetteur et un récepteur, et
- des moyens de sélection (702) pour effectuer une sélection de l'un parmi ledit temps de retard ou ledit au moins un temps de retard supplémentaire qui remplit un critère de sélection d'un algorithme, ledit algorithme étant basé sur une variance de l'angle des symboles MAQ égalisés ou sur un contrôle de redondance cyclique ou sur les caractéristiques de valeurs de probabilité logarithmique.

**9.** Récepteur (800) comprenant un dispositif de télécommunication (802) selon la revendication 8.

**10.** Récepteur selon la revendication 9, le récepteur étant une station de base ou une station mobile.

**11.** Système comprenant un dispositif de télécommunication selon la revendication 8.

**12.** Système selon la revendication 11, avec lequel le système est un système de radiocommunication à modulation à porteuses multiples.

Fig. 1

Fig. 2a

Fig. 2b

Fig. 3a

Fig. 3b

Fig. 4a

Fig. 4b

Fig. 4c

Fig. 5

S1

S2

S3

S4

Fig. 6

# Fig. 7

700

processor

702

program

storage

704

# Fig. 8

800

```
┌─────────────────────────────────┐
│                                 │
│   ┌───────────────────────┐     │
│   │ telecommunication     │     │
│   │      device           │◄────│── 802
│   └───────────────────────┘     │
│                                 │
└─────────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03028205 A1